**Europäisches Patentamt**

**European Patent Office**

**Office européen des brevets**

(19)

(11) Veröffentlichungsnummer : **0 052 224**
**B1**

(12) **EUROPÄISCHE PATENTSCHRIFT**

(45) Veröffentlichungstag der Patentschrift :
25.07.84

(21) Anmeldenummer : **81108070.4**

(22) Anmeldetag : **08.10.81**

(51) Int. Cl.³ : **C 09 D 17/00,** C 09 D 3/00,
C 08 L 39/06

(54) **Pigmentpasten und deren Verwendung.**

(30) Priorität : **19.11.80 DE 3043601**

(43) Veröffentlichungstag der Anmeldung :
**26.05.82 Patentblatt 82/21**

(45) Bekanntmachung des Hinweises auf die Patenterteilung : **25.07.84 Patentblatt 84/30**

(84) Benannte Vertragsstaaten :
**AT CH DE FR GB LI**

(56) Entgegenhaltungen :
**BE-A- 538 633**
**DE-B- 1 275 029**
**FR-A- 2 372 865**
**US-A- 3 492 253**
**US-A- 3 708 290**
**US-A- 4 127 422**

(73) Patentinhaber : **BASF Aktiengesellschaft**
**Carl-Bosch-Strasse 38**
**D-6700 Ludwigshafen (DE)**

(72) Erfinder : **Loch, Werner, Dr.**
**In der Bleiche 2**
**D-6701 Erpolzheim (DE)**

## Beschreibung

Die Erfindung betrifft Pigmentpasten und deren universelle Verwendung zur Pigmentierung von Lackbindemitteln sowie zur Herstellung pigmentierter Hochglanzlacke für verschiedene Anwendungsbereiche.

Die Pigmentierung von Klarlacken wird wesentlich erleichtert, wenn man die Pigmente in Form von Pasten, die das Pigment bereits in der erforderlichen feinverteilten Form enthalten, zusetzt. In solchen Fällen genügt einfaches « Auflacken » der Pigmentpaste, d. h. Vermischen des pastenförmigen Mahlguts mit dem in üblichen Lacklösemitteln gelösten Gemisch aus Bindemittel und Vernetzer zum fertigen Lack, wobei nur geringfügig gerührt wird, der Mischvorgang also ohne größere mechanische Beanspruchung erfolgt. Derartige Pasten müssen bei hohem Pigmentgehalt noch fließfähig, d. h. pumpbar sein, um in einer Lackfabrik gegebenenfalls über Rohrleitungen von einem Bestimmungsort zum anderen befördert werden zu können. Die gleichzeitige Erfüllung beider Anforderungen erweist sich meist als außerordentlich schwierig und läßt sich, wenn überhaupt, nur bei hohem Gehalt an Pastenbindemittel realisieren. Dies führt jedoch häufig zu Unverträglichkeiten mit dem Lackbindemittel und zur Verschlechterung der Lackeigenschaften, so daß für jedes Auflackproblem, vorgegeben durch das Lackbindemittel, speziell darauf zugeschnittene Pastenbindemittel bzw. Pasten eingesetzt werden müssen.

Ein langjähriger Wunschtraum sind Universalpigmentpasten, die mit der Vielzahl der heute zur Verfügung stehenden Bindemitteltypen auflackbar sind. Im Idealfalle würde für jedes Pigment nur 1 Paste benötigt, besondere Farbtöne ließen sich durch Mischen der Pasten einstellen, und die resultierenden Pastenmischungen könnten auf einfache Weise in die Vielfalt von Klarlacktypen eingearbeitet werden. Denkbar wäre bei einer solchen universellen Verträglichkeit auch eine aufeinanderfolgende Einarbeitung verschiedener Pigmentpasten, bis der gewünschte Farbton erreicht ist.

In der BE-PS 538 633 werden Copolymerisate des Vinylpropionats beschrieben, wobei als Comonomeres auch Vinylpyrrolidon eingesetzt werden kann. Angaben über Mengenverhältnisse sind darin nur den Beispielen zu entnehmen. Nach Beispiel 6 enthält das Copolymerisat N-Vinylcaprolactam und Vinylpropionat in Mengen von 19,6 bzw. 78,4 Gew.-% einpolymerisiert. Diese Copolymeren sollen u. a. als Bindemittel für Farbstoffkonzentrate sowie Pigmentdruckpasten, also in der Färberei und Druckerei verwendet werden, sind jedoch nicht geeignet für fließfähige, bindemittelarme Pigmentpasten, die zur Pigmentierung von Einbrennlacken für hochglänzende Beschichtungen verwendet werden, und mit allen praxisüblichen Lackbindemitteltypen einschließlich wäßriger Systeme verträglich sein müssen.

In der DE-AS-12 75 029 werden Pastenbinder für den Textilpigmentdruck beschrieben, die aus Gründen der alkalischen Fixierbarkeit auf der Faser OH-haltige Monomere mit zur OH-Gruppe vicinalem Halogenatom zwingend einpolymerisiert enthalten, wobei zum Aufbau des Polymeren beispielsweise zusätzlich Vinylpropionat und geringe Mengen eines wasserlöslichen Monomeren, wie Vinylpyrrolidon, mitverwendet werden können. Auch die in dieser DE-AS beschriebenen Polymeren sind jedoch nicht als Bindemittel für universell anwendbare Pigmentpasten geeignet.

Aus der US-A-3 492 253 sind Pigmentpasten bekannt, die als Bindemittel ein alkyliertes Polymeres von heterocyclischen N-Vinylmonomeren enthalten. Derartige Bindemittel sind nur in organischen Lösungsmitteln löslich.

Aufgabe der vorliegenden Erfindung ist es, universell einsetzbare Pigmentpasten und die Anwendbarkeit solcher Pasten auch für wäßrige Lackbindemittel aufzuzeigen.

Gegenstand der vorliegenden Erfindung ist eine Pigmentpaste, die dadurch gekennzeichnet ist, daß sie im wesentlichen besteht aus

(A) 20 bis 85 Gew.-% mindestens eines organischen Lösungsmittels,

(B) 0,1 bis 20 Gew.-% eines Copolymeren aus

(a) 10 bis 75 Gew.-% mindestens einer nicht oder nur teilweise mit Wasser mischbaren copolymerisierbaren $\alpha,\beta$-olefinisch ungesättigten Verbindung und

(b) 25 bis 90 Gew.-% N-Vinylpyrrolidon, N-Vinylpiperidon und/oder N-Vinylimidazol und

(C) 10 bis 79 Gew.-% mindestens eines in dem Gemisch aus (A) und (B) dispergierten feinteiligen Pigments und/oder Füllstoffes,

mit der Maßgabe, daß die Summe der unter (A), (B) und (C) genannten Prozentzahlen gleich 100 ist.

Bevorzugt ist es, als nicht oder nur teilweise mit Wasser mischbare copolymerisierbare $\alpha,\beta$-olefinisch ungesättigte Verbindung (a) einen Vinylester einer $C_2$- bis $C_{18}$-Monocarbonsäure und/oder einen (Meth)acrylsäureester eines $C_4$- bis $C_{18}$-Monoalkohols sowie als Komponente (b) N-Vinylpyrrolidon zu verwenden.

Gegenstand der vorliegenden Erfindung ist außerdem die Verwendung der erfindungsgemäßen Pigmentpasten zur Pigmentierung organisch und/oder wäßrig gelöster bzw. dispergierter Lackbindemittel bzw. Bindemittelmischungen sowie als Abtönpasten für bereits pigmentierte Hochglanzlacke.

Überraschend an den erfindungsgemäßen Pigmentpasten sind deren Stabilität und Fließfähigkeit bei niedrigen Bindemittel- und hohen Pigmentgehalten sowie deren Verträglichkeit mit verschiedensten organisch und wäßrig gelösten Lackbindemitteln, wodurch sie in Lackfabriken universell eingesetzt werden können.

Zu den einzelnen Komponenten der erfindungsgemäßen Pigmentpasten ist folgendes auszuführen :

(A) Die Komponente (A) ist ein organisches Lösungsmittel oder Lösungsmittelgemisch, das in einer Konzentration von 20 bis 85 Gew.-%, vorzugsweise 30 bis 80 Gew.-%, in den erfindungsgemäßen Pigmentpasten enthalten ist. Als derartige organische Lösungsmittel eignen sich vorzugsweise :

1) $C_2$- bis $C_4$-Monoalkylether eines Mono- oder Oligoalkylenglykols, wie z. B. Ethylglykol, Butylglykol, Butyldiglykol, 1-Methoxypropanol-(2) und/oder deren Acetate, wie z. B. Ethylenglykolacetat,

2) aromatische bzw. araliphatische Kohlenwasserstoffe, wie z. B. Toluol, Xylol und/oder aromatenreiche höher siedende Benzinfraktionen,

3) andere in der Lacktechnologie übliche organische Lösungsmittel oder -gemische, ausgenommen rein aliphatische Kohlenwasserstoffe ; als besonders vorteilhaft sind Gemische der unter (1) und (2) genannten Lösungsmittel zu nennen.

(B) Die Komponente (B) ist ein Copolymeres, das beispielsweise durch Lösungspolymerisation herstellbar ist, in einer Menge von 0,1 bis 20 Gew.-%, vorzugsweise 3 bis 8 Gew.-%, in den erfindungsgemäßen Pigmentpasten enthalten ist, und

(a) 10 bis 75 Gew.-%, vorzugsweise 20 bis 40 Gew.-%, mindestens einer nicht oder nur teilweise mit Wasser mischbaren copolymerisierbaren $\alpha,\beta$-ethylenisch ungesättigten Verbindung und

(b) 25 bis 90 Gew.-%, vorzugsweise 60 bis 80 Gew.-%, N-Vinylpyrrolidon, N-Vinylpiperidon und/oder N-Vinylimidazol einpolymerisiert enthält. Die Summe der unter (a) und (b) genannten Prozentzahlen ist gleich 100.

Als nicht oder nur teilweise mit Wasser mischbare copolymerisierbare $\alpha,\beta$-ethylenisch ungesättigte Verbindungen (a) eignen sich vorzugsweise Vinylester einer $C_2$- bis $C_{18}$-Monocarbonsäure, wie z. B. Vinylacetat, Vinylpropionat, Vinylpivalat, Vinyl-2-ethylhexanoat, Vinylstearat und/oder Acrylsäure- oder Methacrylsäureester von $C_4$- bis $C_{18}$-Alkoholen, wie z. B. Butyl(meth)acrylat, 2-Ethylhexylacrylat, Laurylacrylat, Octadecylacrylat. Besonders bevorzugte Monomere sind Vinylpropionat und 2-Ethylhexylacrylat. Als weitere, weniger bevorzugte Vertreter der Komponente (a) sind nicht oder nur geringfügig wasserlösliche Derivate des (Meth)acrylamids, Vinylether und/oder Vinylaromaten, wie Styrol, anzuführen.

Als Komponente (b) eignen sich N-Vinylpyrrolidon, N-Vinylpiperidon und/oder N-Vinylimidazol ; besonders bevorzugt ist N-Vinylpyrrolidon.

Die Komponente (B) kann durch übliche Lösungspolymerisation, vorzugsweise in Lösungsmitteln, wie sie unter A (1) und A (2) genannt sind, hergestellt werden.

Die K-Werte (nach Fikentscher) der Komponente (B) liegen im allgemeinen zwischen 20 und 50, vorzugsweise zwischen 25 und 40.

(C) Die Komponente (C) ist ein in der Lacktechnologie übliches anorganisches oder organisches Pigment, ein Füllstoff oder eine Mischung aus diesen, die in dem Gemisch aus den Komponenten (A) und (B) feinteilig dispergiert und in Mengen von 10 bis 79 Gew.-%, vorzugsweise 15 bis 70 Gew.-%, in den erfindungsgemäßen Pigmentpasten enthalten ist.

Bevorzugte anorganische Pigmente bzw. Füllstoffe sind Titandioxid, Chromoxid, Chromate, Eisenoxide, Eisenkomplexe, Molybdatpigmente, Zinksulfid, Bariumsulfat, Kreide und Talkum ; bevorzugte organische Pigmente sind Ruß, Phthalocyanin-, Perylen-, Chinacridon-, Flavanthron-, Anthrapyrimidin- und Pyranthronabkömmlinge. Selbstverständlich sind auch Gemische aus den genannten Pigmenten und Füllstoffen zur Einstellung bestimmter Farbtöne geeignet.

Die Summe der unter (A), (B) und (C) genannten Prozentzahlen ist gleich 100.

Die erfindungsgemäßen Pigmentpasten können außerdem andere in der Lacktechnologie übliche Hilfsstoffe, wie Verlaufsmittel, Netzmittel, Entschäumer, Neutralisationsmittel, Dispergierhilfsmittel, Thixotropiermittel und Antiabsetzmittel in untergeordneten Mengen enthalten.

Zur Herstellung der erfindungsgemäßen Pigmentpasten wird beispielsweise die Komponente (C), vorzugsweise in einer 1- bis 10 Gew.-%igen Lösung des Copolymeren (B) im Lösungsmittel (A) angeteigt, nach in der Lacktechnologie üblichen Methoden naß vermahlen und auf diese Weise in dem Gemisch aus (A) und (B) fein dispergiert, wobei zum Anteigen zweckmäßigerweise ein Dissolver oder ähnliche Mischaggregate eingesetzt werden. Bevorzugte Dispergatoren sind Schüttelmaschinen, wie beispielsweise Red Devil der Fa. Erichsen, Rührwerksmühlen, Sandmühlen etc., wobei aus rheologischen Gründen geschlossene Mahlapparaturen bevorzugt sind. Gegebenenfalls mitzuverwendende andere in der Lacktechnologie übliche Hilfsstoffe können bereits vor der Dispergierung der Pigmente in die Mischung eingearbeitet werden.

Die nach dem Dispergieren in den erfindungsgemäßen Pigmentpasten enthaltenen Pigmente und/oder Füllstoffe (C) weisen im allgemeinen eine Korngröße nach DIN 53 203 unter 15 $\mu$m auf. Die Pasten können beispielsweise Feststoffgehalte von 15 bis 80 Gew.-%, vorzugsweise 20 bis 70 Gew.-% haben ; sie sind nach 1 Woche Lagerung und darüber hinaus noch fließfähig und zeigen praktisch keine Sedimentationsneigung. Sie sind pumpbar und können somit auch in Ringleitungen problemlos gehandhabt werden.

Die erfindungsgemäßen Pigmentpasten sind universell verträglich und können deshalb mit verschiedensten Lackbindemitteltypen, wie beispielsweise Acrylat-, gesättigten und ungesättigten Polyester-, Alkyd-, Epoxy-, Isocyanat-, Polyurethan- und Aminoplastharzen sowie allen denkbaren intra- und intermolekularen Kombinationen aus diesen, welche meist in den unter (A) genannten Lösungsmitteln gelöst sind, aufgelackt werden. In der Mehrzahl der Fälle können auch von organischen Lösungsmitteln freie wäßrige Bindemittel in Form wäßriger Lösungen oder Dispersionen zum Auflacken verwendet werden. Man erhält auf diese Weise umweltfreundliche, wasserverdünnbare Lacke mit mehr oder weniger hohem Cosolventanteil.

Das Auflacken erfolgt mit einer der gewünschten Pigmentvolumenkonzentration entsprechenden Menge an Bindemittel bzw. Bindemittelgemisch. Dabei wird in der Regel das Bindemittel zur Paste gegeben, jedoch ist auch die umgekehrte Reihenfolge möglich. Das Auflacken geschiecht vorzugsweise mit einem Schnellrührer, wobei Drehzahlen von 2 000 U/min bei weitem ausreichen. Beim Auflacken können vorzugsweise auch gegebenenfalls mitzuverwendende übliche Lackhilfsmittel hinzugefügt werden. Die resultierenden Lacke können mit den üblichen unter (A) genannten organischen Lösungsmitteln, in den meisten Fällen auch mit Wasser auf die gewünschte Verarbeitungsviskosität verdünnt werden und weisen übliche Stabilitäten auf.

Zur Einstellung bestimmter Farbtöne können die erfindungsgemäßen Pigmentpasten auch untereinander im jeweils erforderlichen Verhältnis gemischt und anchließend aufgelackt werden. Auch auf Basis verschiedener Copolymerer (B) hergestellte Pasten sind voll miteinander verträglich. Schließlich besteht auch die Möglichkeit, zum Abtönen eines fertigen Lacks geringe Mengen einer erfindungsgemäßen Pigmentpaste in diesen nachträglich einzuarbeiten.

Die fertigen Lacke können auf die verschiedensten Substrate, wie beispielsweise Papier, Holz, Glas, Keramik, Leder, Kunststoffe und Metalle, aufgebracht werden. Das bevorzugte Substrat ist Metall. Die erfindungsgemäßen Pigmentpasten ermöglichen beispielsweise die Formulierung von Grundierungen, Füllern und Decklacken für die Automobillackierung. Durch Auflacken mit den entsprechenden Bindemitteln können schließlich auch Lacke, die für die Bandlackierung geeignet sind, erhalten werden.

Die Applikation der fertigen Lacke erfolgt nach üblichen Methoden, wie Streichen, Rakeln, Spritzen, Walzen, Gießen oder Drucken. Je nach Formulierung können die Überzüge durch physikalische und/oder oxidative Trocknung sowie durch chemische Reaktion bei Raumtemperatur, in der Mehrzahl der Fälle aber bei höheren Temperaturen, wie sie in der Praxis üblich sind, gehärtet werden. Die erhaltenen Überzüge zeichnen sich durch gute klimatisch-technologische Eigenschaften aus, die denen direkter Anmahlungen äquivalent sind, d. h. die Lackeigenschaften bleiben durch das Pastenbindemittel (B) unbeeinflußt.

Die folgenden Beispiele sollen den Gegenstand vorliegender Erfindung näher erläutern. Wenn nicht anders angegeben, handelt es sich bei den aufgeführten Teilen und Prozentangaben um Gewichtsteile bzw. Gewichtsprozente.

Beispiel 1

a) Herstellung des Pastenbindemittels

In einem Reaktionsgefäß werden 200 Teile Ethylenglykolmonobutylether auf 90 °C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Abschließend wird 1 Stunde bei 90 °C nachpolymerisiert. Das resultierende Lösungspolymerisat hat einen K-Wert nach Fikentscher von 24.

Der Festkörpergehalt der Copolymerisatlösung beträgt 76 %.

b) Herstellung einer Weißpaste

In einer Mischung aus 53 Teilen des Copolymerisats nach Beispiel 1a) und 348 Teilen Ethylenglykolmonobutylether werden 800 Teile Titandioxid angeteigt und mit 1 200 Teilen Stahlkugeln 2 Stunden lang in einer Schüttelmaschine (z. B. Red Devil) dispergiert. Nach Abtrennen der Stahlkugeln wird eine Weißpaste erhalten, die wie folgt charakterisiert ist:

| | |
|---|---|
| Körnigkeit nach DIN 53 203 : | < 7 μm |
| Festkörpergehalt : | 69,7 % |
| Pigmentgehalt : | 66,7 % |
| Bindemittelgehalt : | 3,3 % |

c) Herstellung einer Blaupaste

In einer Mischung aus 0,7 Teilen des Polymerisats nach Beispiel 1a) und 9,4 Teilen Ethylenglykolmonobutylether werden 1,9 Teile Kupferphthalocyanin mit einem Schnellrührer angeteigt. Die Mischung wird anschließend zweimal über eine kontinuierliche Rührwerksmühle gegeben (Durchsatz ca. 8 1/h). Als Mahlkörper werden Stahlkugeln verwendet. Die resultierende Blaupaste ist durch folgende Daten charakterisiert:

| | |
|---|---|
| Körnigkeit nach DIN 53 203 : | < 15 μm |
| Festkörpergehalt : | 20,0 % |
| Pigmentgehalt : | 15,8 % |
| Bindemittelgehalt : | 4,4 % |

d) Herstellung einer Gelbpaste

In einer Mischung aus 6,6 Teilen des Polymerisats nach Beispiel 1a), 5,7 Teilen Ethylenglykolmonobutylether und 87,7 Teilen Xylol werden 20 Teile 1,9-Anthrapyrimidin-2-carbonsäure-anthrachinolylamid angeteigt und mit 300 Teilen Stahlkugeln 2 Stunden lang in einer Schüttelmaschine (z. B. Red Devil) dispergiert. Nach Abtrennung der Stahlkugeln wird eine Gelbpaste erhalten, die wie folgt charakterisiert ist :

| | |
|---|---|
| Körnigkeit nach DIN 53 203 : | < 10 μm |
| Festkörpergehalt : | 20,8 % |
| Pigmentgehalt : | 16,7 % |
| Bindemittelgehalt : | 4,2 % |

e) Herstellung einer Schwarzpaste

In einer Mischung aus 19,7 Teilen des Polymerisats nach Beispiel 1a) und 130,3 Teilen Ethylenglykolmonobutylether werden 64,5 Teile Knochenruß angeteigt und mit 300 Teilen Stahlkugeln 6 Stunden in einer Schüttelmaschine dispergiert. Nach Abtrennen der Stahlkugeln wird eine Schwarzpaste erhalten, die wie folgt charakterisiert ist :

| | |
|---|---|
| Körnigkeit nach DIN 53 203 : | < 15 μm |
| Festkörpergehalt : | 36,5 % |
| Pigmentgehalt : | 30,1 % |
| Bindemittelgehalt : | 7,0 % |

Beispiel 2

a) Herstellung des Pastenbindemittels

In einem Reaktionsgefäß werden 490 Teile Isobutanol auf 90 °C erwärmt. Anschließend wird binnen 2 Stunden ein Gemisch aus 450 Teilen N-Vinylpyrrolidon, 150 Teilen 2-Ethylhexylacrylat und 1,2 Teilen Azobisisobutyronitril zugetropft. Danach wird 1,5 Stunden bei 90 °C nachpolymerisiert. Das resultierende Lösungspolymerisat hat einen K-Wert nach Fikentscher von 28. Das Produkt wird durch Vakuumdestillation unter gleichzeitiger Zufuhr von Xylol kontinuierlich in dieses Medium übergeführt.

Festkörpergehalt : 50 %

b) Herstellung einer Weißpaste

In einer Mischung aus 21,7 Teilen des Polymerisats nach Beispiel 2a) und 78,3 Teilen Xylol werden 240 Teile Titandioxid angeteigt und mit 300 Teilen Stahlkugeln 2 Stunden lang in einer Schüttelmaschine (z. B. Red Devil) dispergiert. Nach Abtrennen der Stahlkugeln wird eine Weißpaste erhalten, die wie folgt charakterisiert ist :

| | |
|---|---|
| Körnigkeit nach DIN 53 203 : | < 7 μm |
| Festkörpergehalt : | 73,6 % |
| Pigmentgehalt : | 70,6 % |
| Bindemittelgehalt : | 3,2 % |

C) Herstellung einer Blaupaste

In einer Mischung aus 29,6 Teilen des Polymerisats nach Beispiel 2a) und 170,4 Teilen Xylol werden 31 Teile Kupferphthalocyanin angeteigt und mit 300 Teilen Stahlkugeln 2 Stunden in einer Schüttelmaschine (z. B. am Red Devil) dispergiert. Nach Abtrennen der Stahlkugeln resultiert eine Blaupaste, die wie folgt charakterisiert ist :

| | |
|---|---|
| Körnigkeit nach DIN 53 203 : | < 15 μm |
| Festkörpergehalt : | 19,9 % |
| Pigmentgehalt : | 13,4 % |
| Bindemittelgehalt : | 6,5 % |

Beispiel 3

a) Herstellung des Pastenbindemittels

5

In einem Reaktionsgefäß werden 167 Teile Ethylenglykolmonobutylether auf 90 °C erwärmt. Anschließend wird binnen 2 Stunden eine Mischung aus 375 Teilen N-Vinylpyrrolidon, 125 Teilen 2-Ethylhexylacrylat und 1 Teil Azobisisobutyronitril zugetropft. Kurz vor Zulaufende wird mit 102 Teilen Ethylenglykolmonobutylether auf 65 % Festkörpergehalt verdünnt und eine Stunde bei 90 °C nachpolymerisiert. Nach Reaktionsende wird das resultierende Lösungspolymerisat mit einer aromatischen Benzinfraktion (Sdp. : 185 bis 200 °C) auf 10 % Festkörpergehalt verdünnt. Das Polymerisat hat einen K-Wert nach Fikentscher von 33.

b) Herstellung einer Weißpaste

In 400 Teilen des Polymerisats nach Beispiel 3a) werden 800 Teile Titandioxid mit einem Schnellrührer angeteigt und das Gemisch analog Beispiel 1c) einmal über eine Rührwerksmühle gegeben. Als Mahlkörper dienen Aluminiumoxidperlen. Die so erhaltene Weißpaste ist wie folgt charakterisiert :

| | |
|---|---|
| Körnigkeit nach DIN 53 203 : | < 10 μm |
| Festkörpergehalt : | 69,8 % |
| Pigmentgehalt : | 66,7 % |
| Bindemittelgehalt : | 3,3 % |

Beispiel 4

Farbtonpasten

a) Herstellung einer Grautonpaste

232,2 Teile Weißpaste nach Beispiel 1b) und 109,6 Teile Schwarzpaste nach Beispiel 1e) werden miteinander verrührt. Die resultierende Grautonpaste zeigt keine Kornvergröberung (Flockulation) und ist wie folgt charakterisiert :

| | |
|---|---|
| Festkörpergehalt : | 58,5 % |
| Pigmentgehalt : | 55,0 % |
| Bindemittelgehalt : | 4,5 % |

Unter Berücksichtigung der leicht abweichenden Pigmentgehalte können für die Weißpaste nach Beispiel 1b) auch die Weißpasten nach den Beispielen 2b) und 3b) eingesetzt werden.

b) Herstellung einer Blautonpaste

102,6 Teile Blaupaste nach Beispiel 1c), 9,7 Teile Weißpaste nach Beispiel 1b) und 18,3 Teile Schwarzpaste nach Beispiel 1e) werden miteinander verrührt. Die resultierende Blautonpaste zeigt keine Kornvergröberung (Flockulation) und ist wie folgt charakterisiert :

| | |
|---|---|
| Festkörpergehalt : | 26,0 % |
| Pigmentgehalt : | 21,6 % |
| Bindemittelgehalt : | 4,7 % |

Unter Berücksichtigung etwaiger differierender Pigmentgehalte können anstelle der Blaupaste nach Beispiel 1c) auch die Blaupaste nach Beispiel 2c) und statt der Weißpaste nach Beispiel 1b) die Weißpasten nach Beispiel 2b) oder 3b) verwendet werden.

c) Herstellung einer Grüntonpaste

11,8 Teile Blaupaste gemäß Beispiel 1c), 23,7 Teile Weißpaste gemäß Beispiel 1b) und 113,3 Teile Gelbpaste gemäß Beispiel 1d) werden miteinander verrührt. Die resultierende Grüntonpaste zeigt keine Kornvergröberung (Flockulation) und ist wie folgt charakterisiert :

| | |
|---|---|
| Festkörpergehalt : | 28,1 % |
| Pigmentgehalt : | 24,6 % |
| Bindemittelgehalt : | 4,1 % |

Bei Berücksichtigung der leicht differierenden Pigmentgehalte können anstelle der Blaupaste gemäß Beispiel 1c) die Blaupaste gemäß Beispiel 2c) bzw. statt der Weißpaste gemäß Beispiel 1b) auch die Weißpasten nach den Beispielen 2b) oder 3b) eingesetzt werden.

Beispiel 5

Auflackungen

Die im folgenden beschriebenen Auflackungen können unter Berücksichtigung der jeweils gewünschten Pigmentvolumenkonzentrationen mit gutem Erfolg bei allen Pigmentpasten nach den Beispielen 1 bis 4 durchgeführt werden. Hier werden jedoch nur einige Beispiele angeführt.

a) Herstellung eines Grünlacks

200 Teile Grüntonpaste nach Beispiel 4c) werden mit 263 Teilen einer Mischung aus 60 Teilen eines handelsüblichen kurzöligen, nicht trocknenden Alkydharzes mit einer Säurezahl von ca. 20 und einer OH-Zahl von ca. 90, 12 Teilen eines handelsüblichen, teilverätherten, reaktiven Melaminformaldehydharzes, 35 Teilen Xylol und 10 Teilen Butanol versetzt. Die resultierende Mischung wird eine Minute bei 2 000 U/min mit einem Schnellrührer homogenisiert. Der erhaltene Lack wird mit Xylol auf Spritzviskosität verdünnt, auf Bleche gespritzt und 30 min bei 130 °C eingebrannt. Es entstehen hochglänzende Lackfilme, die in ihrem Eigenschaftsbild einer entsprechenden Direktanmahlung in der erwähnten Klarlackmischung voll und ganz entsprechen.

b) Herstellung eines Weißlacks

200 Teile Weißpaste nach Beispiel 3b) werden mit 255 Teilen einer Mischung aus 55 Teilen eines handelsüblichen Polyacrylatharzes mit einer Säurezahl von ca. 80 und einem K-Wert nach Fikentscher von ca. 25, 14 Teilen eines handelsüblichen, teilverätherten, reaktiven Melaminformaldehydharzes und 50 Teilen Isobutanol mit einem Schnellrührer eine Minute bei 2 000 U/min vermischt. Der resultierende Lack wird auf Bleche gerakelt und 30 min bei 130 °C eingebrannt. Man erhält hochglänzende Überzüge, deren Eigenschaften denen der direkt pigmentierten Klarlackmischung völlig entsprechen.

c) Herstellung eines Graulackes

200 Teile Grautonpaste nach Beispiel 4a) werden mit 277 Teilen einer Mischung aus 50 Teilen eines handelsüblichen gesättigten Polyesters mit einer Säurezahl von ca. 35 und einer OH-Zahl von ca. 75 (K-Wert nach Fikentscher ca. 15), 12,5 Teilen eines handelsüblichen, vollverätherten Melaminformaldehydharzes und 50 Teilen Isobutanol mit einem Schnellrührer eine Minute bei 2 000 U/min verrührt. Der resultierende Lack wird mit Ethylenglykolmonobutylether auf Spritzviskosität verdünnt, auf Bleche gespritzt und 30 min bei 150 °C eingebrannt. Es entstehen glänzende Überzüge von gleichem Eigenschaftsniveau wie es auch bei der entsprechenden Direktanmahlung gefunden wird.

d) Herstellung eines Blaulacks

200 Teile Blautonpaste nach Beispiel 4b) werden mit 363 Teilen einer Mischung aus 57 Teilen eines handelsüblichen benzoesäuremodifizierten kurzöligen Alkydharzes mit einer Säurezahl von ca. 15 und einer OH-Zahl von ca. 60, 11,4 Teilen eines handelsüblichen, teilverätherten, reaktiven Melaminformaldehydharzes, 17 Teilen einer aromatischen Benzinfraktion mit einem Siedebereich von 185 bis 200 °C und 20 Teilen Testbenzin mit Hilfe eines Schnellrührers eine Minute bei 2 000 U/min aufgelackt. Der resultierende Lack wird, gegebenenfalls nach Verdünnung mit oben genannter aromatischer Benzinfraktion auf Bleche appliziert und 30 min bei 140 °C eingebrannt. Die erhaltenen Überzüge sind hochglänzend und zeigen das gleiche Eigenschaftsbild wie eine entsprechende direkt pigmentierte Klarlackmischung.

**Ansprüche**

1. Pigmentpaste, dadurch gekennzeichnet, daß sie im wesentlichen besteht aus
   (A) 20 bis 85 Gew.-% mindestens eines organischen Lösungsmittels,
   (B) 0,1 bis 20 Gew.-% eines Copolymeren aus
      (a) 10 bis 75 Gew.-% mindestens einer nicht oder nur teilweise mit Wasser mischbaren, copolymerisierbaren $\alpha,\beta$-ölefinisch ungesättigten Verbindung und
      (b) 25 bis 90 Gew.-% N-Vinylpyrrolidon, N-Vinylpiperidon und/oder N-Vinylimidazol und
   (C) 10 bis 79 Gew.-% mindestens eines in dem Gemisch aus (A) und (B) dispergierten feinteiligen Pigments und/oder Füllstoffes,
mit der Maßgabe, daß die Summe der unter (A), (B) und (C) genannten Prozentzahlen gleich 100 ist.
2. Pigmentpaste nach Anspruch 1, dadurch gekennzeichnet, daß das organische Lösungsmittel (A) ein $C_2$- bis $C_4$-Monoalkylether des Ethylenglykols und/oder dessen Monoacetats ist.
3. Pigmentpaste nach Anspruch 1, dadurch gekennzeichnet, daß das organische Lösungsmittel (A) ein aromatischer Kohlenwasserstoff und/oder eine aromatenreiche höher siedende Benzinfraktion ist.

4. Pigmentpaste nach Anspruch 1, dadurch gekennzeichnet, daß als Komponente (a) im Copolymeren (B) ein Vinylester einer $C_2$- bis $C_{18}$-Monocarbonsäure und/oder ein (Meth)acrylsäureester eines $C_4$- bis $C_{18}$-Monoalkohols einpolymerisiert ist.

5. Pigmentpaste nach Anspruch 1, dadurch gekennzeichnet, daß als Komponente (b) im Copolymeren (B) N-Vinylpyrrolidon einpolymerisiert ist.

6. Verwendung der Pigmentpasten nach einem der Ansprüche 1 bis 5 zur Pigmentierung organisch und/oder wäßrig gelöster bzw. dispergierter Lackbindemittel und Bindemittelmischungen.

7. Verwendung der Pigmentpasten nach einem der Ansprüche 1 bis 5 als Abtönpasten für bereits pigmentierte Hochglanzlacke.


**Claims**

1. A pigment paste consisting essentially of
   (A) from 20 to 85 % by weight of one or more organic solvents,
   (B) from 0,1 to 20 % by weight of a copolymer of
      (a) from 10 to 75 % by weight of one or more water-immiscible, or only partially water-miscible, copolymerizable $\alpha,\beta$-olefinically unsaturated compounds, and
      (b) from 25 to 90 % by weight of N-vinylpyrrolidone, N-vinylpiperidone and/or N-vinylumidazole, and
   (C) from 10 to 79 % by weight of one or more finely divided pigments or fillers, or a mixture of pigment and filler, dispersed in the mixture of (A) and (B),
with the proviso that the sum of the percentages of (A), (B) and (C) is 100.

2. A pigment paste as claimed in claim 1, wherein the organic solvent (A) is a $C_2$-$C_4$-monoalkyl ether of ethylene glycol, and/or the monoacetate thereof.

3. A pigment paste as claimed in claim 1, wherein the organic solvent (A) is an aromatic hydrocarbon and/or a relatively high-boiling gasoline fraction rich in aromatics.

4. A pigment paste as claimed in claim 1, wherein component (a) present as copolymerized units in the copolymer (B) is a vinyl ester of a $C_2$-$C_{18}$-monocarboxylic acid and/or an acrylic acid ester or methacrylic acid ester of a $C_4$-$C_{18}$-monoalcohol.

5. A pigment paste as claimed in claim 1, wherein component (b) present as copolymerized units in the copolymer (B) is N-vinylpyrrolidone.

6. The use of a pigment paste as claimed in any of claims 1 to 5 for pigmenting a surface-coating binder or binder mixture dissolved or dispersed in an organic solvent and/or water.

7. The use of a pigment paste as claimed in any of claims 1 to 5 for toning a pigmented high-gloss paint.


**Revendications**

1. Pigment en pâte, caractérisé en ce qu'il est constitué essentiellement de
   (A) 20 à 85 % en poids d'au moins un solvant organique ;
   (B) 0,1 à 20 % en poids d'un copolymère de
      (a) 10 à 75 % en poids d'au moins un composé à insaturation oléfinique en $\alpha,\beta$, copolymérisable, non ou seulement partiellement mélangeable avec de l'eau ; et
      (b) 25 à 90 % en poids de N-Vinylpyrrolidone, N-Vinylpipéridone et/ou N-Vinylimidazol ; et
   (C) 10 à 79 % en poids d'au moins un pigment et/ou charge, finement réparti, dispersé dans le mélange de (A) et (B)
sous réserve que la somme des pourcentages indiqués sous (A), (B) et (C) soit égale à 100.

2. Pigment en pâte selon la revendication 1, caractérisé en ce que le solvant organique (A) est un monoalkyléther en $C_2$ à $C_4$ de l'éthylèneglycol et/ou son monoacétate.

3. Pigment en pâte selon la revendication 1, caractérisé en ce que le solvant organique (A) est un hydrocarbure aromatique et/ou une fraction d'essence, à point d'ébullition élevé, riche en aromatiques.

4. Pigment en pâte selon la revendication 1, caractérisé en ce que, comme composant (a) dans le copolymère (B), on fait entrer en polymérisation un ester vinylique d'un acide monocarboxylique en $C_2$ à $C_{18}$ et/ou un ester d'acide(meth)acrylique d'un mono-alcool en $C_4$ à $C_{18}$.

5. Pigment en pâte selon la revendication 1, caractérisé en ce que, comme composant (b) dans le copolymère (B), on fait entrer en polymérisation de la N-vinylpyrrolidone.

6. Utilisation du pigment en pâte selon l'une des revendications 1 à 5 pour la pigmentation de liant et mélanges de liants pour vernis, organiques et/ou dissous ou dispersés dans l'eau.

7. Utilisation du pigment en pâte selon l'une des revendications 1 à 5, comme pâte de nuançage pour vernis à poli spéculaire déjà pigmenté.